# DEMANDE DE BREVET EUROPEEN

(11) **EP 4 703 264 A1**
(43) Date de publication de la demande: **04.03.2026**
(21) Numéro de dépôt: 25195822.9
(22) Date de dépôt: 13.08.2025
(51) Int. Cl.: B64C 25/00, B64D 27/35, B64D 41/00, B64F 1/35, B64C 25/32

(54) **TRAIN D'ATTERRISSAGE AVEC RÉCEPTEUR D'ÉNERGIE ÉLECTRIQUE POUR LE DÉPLACEMENT D'UN AÉRONEF EN PHASE DE ROULAGE**

(30) Priorité: 30.08.2024 FR 2409259
(71) Demandeur: Airbus (S.A.S.), 31700 Blagnac (FR)
(72) Inventeur: ROUYRE, François, 31700 Blagnac Cedex (FR); CHASSAIGNE, Didier, 31700 Blagnac Cedex (FR); CREPEL, Olivier, 31700 Blagnac Cedex (FR)
(74) Mandataire: BCF Global

(57) **Abrégé**

L'invention concerne un train d'atterrissage (1) pour un aéronef, comprenant une jambe et un support de roues, et deux roues solidaires de la jambe par le support de roues, les roues étant distantes l'une de l'autre de sorte qu'un espace, dit volume interne, est délimité entre les deux roues, le train d'atterrissage comprenant un dispositif de réception d'énergie électrique, le dispositif de réception d'énergie électrique comprenant un récepteur (4), configuré pour recevoir de l'énergie électrique émise par un émetteur (5), le dispositif de réception d'énergie électrique étant monté mobile entre une position rétractée et une position déployée, dans laquelle le récepteur (4) est disposé hors du volume interne, le dispositif de réception d'énergie électrique comprenant une extrémité solidaire du support de roues.

## Description

### Domaine technique

La présente invention se rapporte à un train d'atterrissage muni d'un dispositif de réception d'énergie électrique pour le déplacement d'un aéronef en phase de roulage.

### Technique antérieure

Avant son décollage ou après son atterrissage, un aéronef se déplace au sol en roulant sur une voie de circulation d'une installation aéroportuaire entre sa zone de stationnement et la piste de décollage et d'atterrissage. On parle de phase de roulage, ou de taxiing. Au cours de cette phase, l'aéronef utilise la poussée générée par ses ensembles de propulsion.

Cette solution n'est pas optimale car l'aéronef consomme de l'énergie sous forme de carburant stocké dans ses réservoirs pour se déplacer au sol, ce qui conduit à augmenter la consommation de carburant et la masse embarquée de l'aéronef.

Le but de l'invention est de remédier au moins partiellement à ces inconvénients.

### Résumé

A cet effet, il est proposé un train d'atterrissage pour un aéronef, comprenant une jambe et un support de roues, et deux roues solidaires de la jambe par le support de roues, les roues étant distantes l'une de l'autre de sorte qu'un espace, dit volume interne, est délimité entre les deux roues, le train d'atterrissage comprenant un dispositif de réception d'énergie électrique, le dispositif de réception d'énergie électrique comprenant un élément de réception d'énergie électrique, dit récepteur, configuré pour recevoir de l'énergie électrique émise par un élément d'émission d'énergie électrique, dit émetteur, disposé à distance du train d'atterrissage, le dispositif de réception d'énergie électrique étant monté mobile entre une position rétractée et une position déployée, dans laquelle le récepteur est disposé hors du volume interne, le dispositif de réception d'énergie électrique comprenant une extrémité solidaire du support de roues.

Grâce au train d'atterrissage selon la présente invention, il est possible d'alimenter électriquement un moteur électrique pour les trains d'atterrissage de l'aéronef, ce qui permet d'éviter de recourir aux ensembles de propulsion de l'aéronef et au groupe auxiliaire de puissance, et ainsi de réduire la masse embarquée et la consommation de carburant de l'aéronef car ce dernier ne consomme alors plus de carburant pour se déplacer au sol.

L'invention a pour objet un train d'atterrissage pour un aéronef, comprenant une jambe et un support de roues, et deux roues solidaires de la jambe par le support de roues, les roues étant distantes l'une de l'autre de sorte qu'un espace, dit volume interne, est délimité entre les deux roues, le train d'atterrissage comprenant un dispositif de réception d'énergie électrique, le dispositif de réception d'énergie électrique comprenant un élément de réception d'énergie électrique, dit récepteur, configuré pour recevoir de l'énergie électrique émise par un élément d'émission d'énergie électrique, dit émetteur, dans lequel le dispositif de réception d'énergie électrique comprenant une structure de maintien du récepteur, le dispositif de réception d'énergie électrique étant monté mobile entre une position rétractée dans laquelle le dispositif de réception d'énergie électrique est disposé dans le volume interne, et une position déployée dans laquelle le récepteur est disposé hors du volume interne, le dispositif de réception d'énergie électrique comprenant une extrémité solidaire du support de roues.

Selon un autre aspect, le dispositif de réception d'énergie électrique comprend une structure de maintien du récepteur.

Selon un autre aspect, la structure de maintien comprend une partie fixe, comportant l'extrémité du dispositif de réception d'énergie électrique solidaire du support de roues et une partie articulée sur la partie fixe.

Selon un autre aspect, le récepteur est solidaire d'une extrémité de la partie articulée de la structure.

Selon un autre aspect, le récepteur est monté mobile relativement à la partie articulée de la structure.

Selon un autre aspect, le dispositif de réception d'énergie électrique comprend un actionneur de commande du récepteur.

Selon un autre aspect, le récepteur comprend un patin à induction, pour coopérer avec l'émetteur sans contact et/ou un contacteur pour coopérer avec l'émetteur par contact.

Selon un autre aspect, le train d'atterrissage comprend un moteur électrique configuré pour commander lesdites roues du train d'atterrissage de l'aéronef et configuré pour être alimenté en énergie électrique via le récepteur.

L'invention a également pour objet un aéronef, comprenant un train d'atterrissage tel que décrit précédemment.

L'invention a également pour objet un système de transfert d'énergie électrique, comprenant un aéronef tel que décrit précédemment et un émetteur d'énergie électrique configuré pour alimenter en énergie électrique le récepteur dans la position déployée du dispositif de réception d'énergie électrique.

### Brève description des dessins

D'autres caractéristiques, détails et avantages apparaîtront à la lecture de la description détaillée ci-après, et à l'analyse des dessins annexés, sur lesquels :
**Fig. 1**

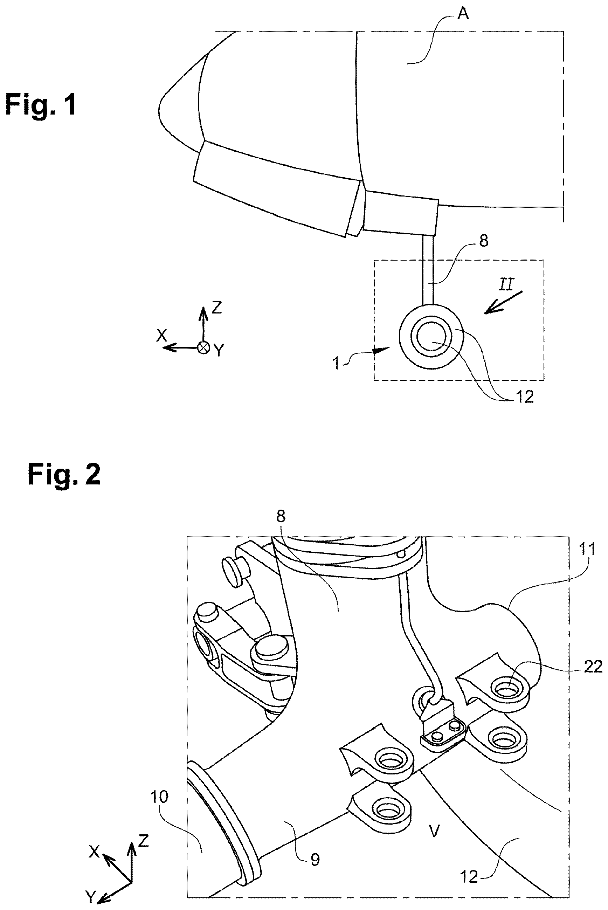

   [Fig. 1] est une vue schématique en perspective de côté d'une partie avant d'un aéronef qui peut être muni d'un train s'atterrissage selon la présente invention.
**Fig. 2**
   [Fig. 2] est une vue schématique en perspective d'un détail II de la figure 1 pour positionner un dispositif de réception d'énergie électrique.
**Fig. 3**

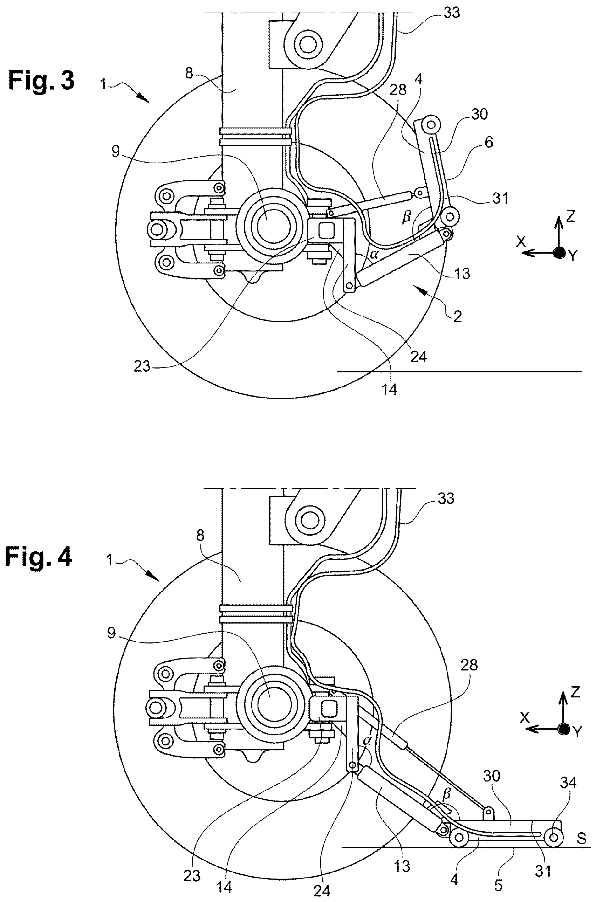

   [Fig. 3] est une vue de côté d'un train s'atterrissage selon la présente invention, en position rétractée.
**Fig. 4**
   [Fig. 4] est une vue schématique du train s'atterrissage de la figure 3 en position déployée.
**Fig. 5**

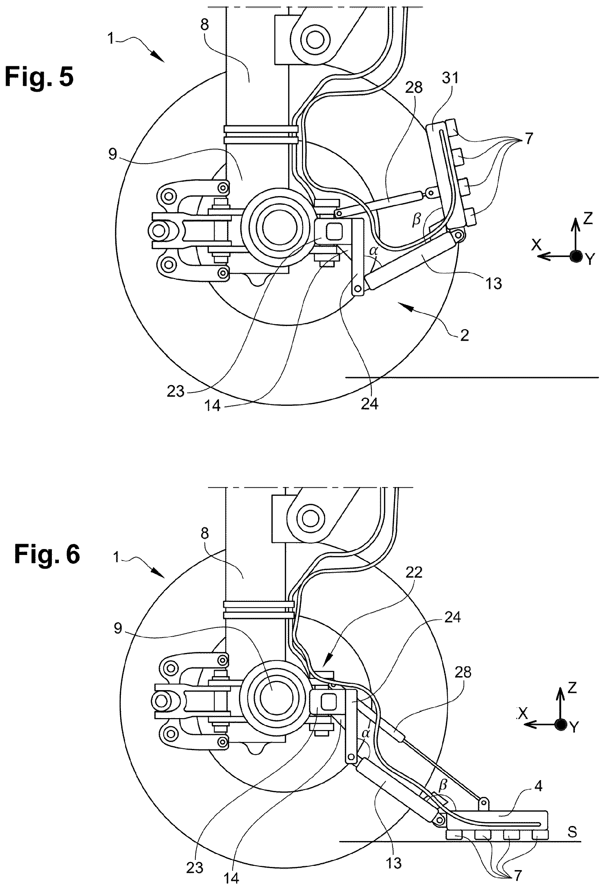

   [Fig. 5] est une vue de côté d'un train s'atterrissage selon une variante de réalisation de la présente invention, en position rétractée.
**Fig. 6**
   [Fig. 6] est une vue schématique du train s'atterrissage de la figure 5 en position déployée.
**Fig. 7**

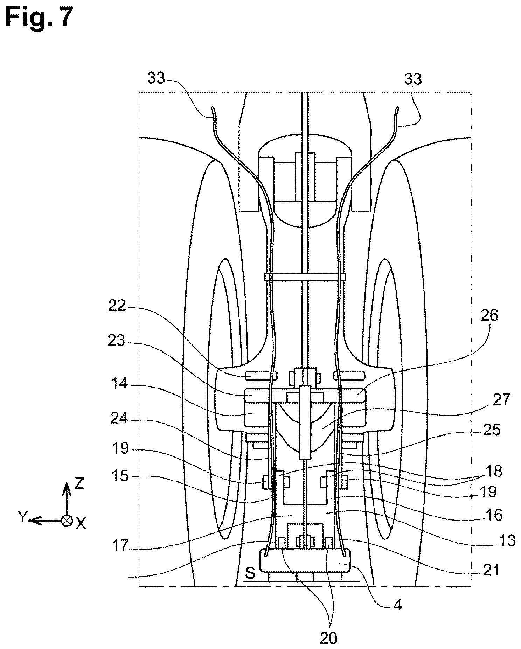

   [Fig. 7] est une vue schématique arrière du train s'atterrissage de la figure 6.

### Description des modes de réalisation

Les exemples et les conditions associées détaillés ici sont principalement destinés à aider le lecteur à comprendre les principes de la présente invention et non à limiter sa portée à ces exemples et conditions spécifiques. On comprendra que l'homme du métier peut concevoir divers agencements qui, bien qu'ils ne soient pas explicitement décrits ou représentés ici, incarnent néanmoins les principes de la présente invention et sont inclus dans son esprit et sa portée.

En outre, pour faciliter la compréhension, la description suivante peut décrire des mises en œuvre relativement simplifiées de la présente invention. Comme l'homme du métier le comprend, d'autres mises en œuvre de la présente invention peuvent être d'une plus grande complexité.

Dans certains cas, des exemples de modifications de la présente invention peuvent également être présentés. Ceci est fait simplement comme une aide à la compréhension, et, à nouveau pas pour définir la portée ou établir les limites de la présente invention. Ces modifications ne sont pas une liste exhaustive, et l'homme du métier pourra apporter d'autres modifications tout en restant dans le cadre de la présente invention.

En outre, toutes les déclarations ci-après relatives aux principes, aspects et mises en œuvre de la présente invention, ainsi que les exemples spécifiques de celle-ci, visent à englober à la fois les équivalents structurels et fonctionnels de celle-ci, qu'ils soient actuellement connus ou développés à l'avenir.

Pour simplifier la lecture de la présente description, on a illustré un repère orthonormé (X, Y, Z) sur les figures. La direction X correspond à la direction d'avancement de l'aéronef et la direction Z à une direction verticale, l'aéronef étant illustré en phase de roulage.

Comme il ressort des figures 1 à 7, l'invention a pour objet un train d'atterrissage, référencé 1 sur les figures. Le train d'atterrissage 1 comprend un dispositif de réception d'énergie électrique, référencé 2.

Comme visible sur les figures 1 et 2, le train d'atterrissage 1 est destiné à équiper un aéronef A, et l'invention a également pour objet l'aéronef A muni du train d'atterrissage 1.

Le dispositif de réception d'énergie électrique 2 comprend un élément de réception d'énergie électrique, dit récepteur, référencé 4. Le récepteur 4 est configuré pour recevoir de l'énergie électrique émise par un élément de réception d'énergie électrique, dit émetteur 5. L'émetteur 5 est distinct du train d'atterrissage 1 ; il n'en fait pas partie.

Selon une première variante de réalisation, illustrée sur les figures 3 et 4, le récepteur 4 se présente sous la forme d'un patin 6, tandis que, selon la deuxième variante, illustrée sur les figures 5, 6 et 7, le récepteur 4 se présente sous la forme d'un ensemble de contacteurs 7.

Le patin 6 est conformé pour transférer sans contact l'énergie électrique émise par l'émetteur 5. Par exemple, selon une technologie inductive, l'émetteur 5, de préférence présent au sol S, est configuré pour générer un champ électromagnétique et le récepteur 6 est un élément à induction électromagnétique configuré pour générer un courant électrique lorsqu'il est positionné dans le champ magnétique généré par l'émetteur 5. Dans ce cas, le récepteur 6 comprend au moins une bobine.

Chaque contacteur 7 est conformé pour transférer l'énergie électrique émise par l'émetteur 5 lorsque le contacteur 7 est en contact avec l'émetteur 5 qui peut, par exemple, se présenter sous la forme de rails au sol S.

Comme visible sur les figures, le dispositif 2 est monté mobile entre une position rétractée, illustrée sur les figures 3 et 5, et une position déployée illustrée sur les figures 4, 6 et 7, dans laquelle le récepteur 4 est disposé de manière à recevoir l'énergie émise par l'élément émetteur 5.

Comme il ressort également des figures, le train d'atterrissage 1 comprend une jambe 8 solidaire du fuselage F de l'aéronef A. Lorsque l'aéronef A est en phase de roulage, la jambe 8 s'étend sensiblement orthogonalement au sol S. Le train d'atterrissage 1 comprend également un support de roues 9 s'étendant de manière rectiligne entre deux extrémités 10, 11, chacune des extrémités 10, 11 portant une roue 12.

On appelle volume interne V un volume délimité par l'espace entre les deux roues 12.

On décrit maintenant le dispositif 2.

Le dispositif 2 comprend un support 13 du récepteur 4, monté mobile, et un élément de structure, 14, fixé au support de roues 9.

Comme plus particulièrement visible sur la figure 7, le support 13 présente une forme générale de H, et comprend avantageusement deux bras parallèles, 15, 16, et au moins un bras de jonction 17 qui solidarise les bras parallèles 15, 16, l'un à l'autre. Chaque bras de jonction 17 est de préférence disposé orthogonalement aux bras parallèles 15, 16. Sur le mode de réalisation illustré, et de façon non limitative, le support 13 comprend un unique bras de jonction 17.

Chacun des bras 15, 16 s'étend entre une première extrémité 18 solidaire via une articulation 19, par exemple une liaison pivot, à l'élément de structure 14 et une deuxième extrémité 20 solidaire via une articulation 21, par exemple une liaison pivot, au récepteur 4.

Comme visible sur les figures, l'élément de structure 14 est fixé au support de roues 9 par des attaches de fixation 22 et articulé au support 13.

Comme il apparaît particulièrement sur la figure 7, l'élément de structure 14 comprend une partie 23 reposant sur le support de roues 9 et deux barres parallèles, 24 25, solidarisées par les articulations 19 aux bras parallèles 15, 16 du support 13. La partie 23 comprend avantageusement une portion rectiligne 26 et une portion courbée 27, espacée de la portion rectiligne 26, ce qui renforce l'élément de structure 14 tout en ajoutant le moins possible de masse.

On appelle premier angle d'articulation, référencé α, un angle délimité par la partie 23 et chacune des barres 25, 26.

L'extrémité de chacune des barres 25, 26 solidaire du support 13 décrit un arc de cercle entre une première position correspondant à une valeur minimale de l'angle α et une deuxième position correspondant à une valeur maximale de l'angle α. Avantageusement, et de façon non limitative, la valeur minimale est inférieure ou égale à 90°, par exemple comprise entre 45° et 90°, par exemple entre 50° et 70°, par exemple 60°. Avantageusement, et de façon non limitative, la valeur maximale est supérieure ou égale à 90°, par exemple comprise entre 90° et 150°, par exemple entre 110° et 140°, par exemple 130°.

La première position correspond à une position repliée du support 13 relativement à l'élément de structure 14, tandis que la deuxième position correspond à une position étendue du support 13 relativement à l'élément de structure 14.

Le train d'atterrissage 1 comprend avantageusement un moyen de pilotage du support entre la position repliée et la position étendue, par exemple un actionneur, tel qu'un vérin hydraulique ou pneumatique, non illustré sur les figures.

On appelle deuxième angle d'articulation, référencé β, un angle délimité par chacun des bras 15, 16 et le récepteur 4.

L'extrémité 21 de chacun des bras 15, 16 solidaire du récepteur 4 décrit un arc de cercle entre une première position correspondant à une valeur minimale de l'angle β et une deuxième position correspondant à une valeur maximale de l'angle β. Avantageusement, et de façon non limitative, la valeur minimale est comprise entre 110° et 160°, par exemple 130°, et la valeur maximale est comprise entre 120° et 170°, par exemple 160°.

La première position correspond à une position repliée du récepteur 4 relativement au support 13, tandis que la deuxième position correspond à une position étendue du récepteur 4 relativement au support 13.

Le train d'atterrissage 1 comprend avantageusement un moyen de pilotage du support entre la position repliée et la position étendue, par exemple un actionneur, tel qu'un vérin hydraulique ou pneumatique, référencé 28 sur les figures. L'actionneur 28 permet également de plaquer les contacteurs 7 contre le sol S, afin de transférer l'énergie électrique par friction entre l'émetteur 5 et les contacteurs 7. L'actionneur 28 comprend un cylindre 28-1 solidaire du support de roues 9, et une tige rigide 28-2 solidaire par une extrémité d'un chariot 30, détaillé ultérieurement.

Lorsque le récepteur 4 est en position repliée relativement au support 13, et le support 13 est en position repliée relativement à l'élément de structure 14, le dispositif de réception d'énergie électrique 2 est en position rétractée.

Lorsque le récepteur 4 est en position étendue relativement au support 13, et le support 13 est en position étendue relativement à l'élément de structure 14, le dispositif de réception d'énergie électrique 2 est en position déployée.

En position rétractée, le récepteur 4 est inclus dans le volume interne V jusqu'à, éventuellement, être tangent aux roues 12. En position déployée, le récepteur 4 est disposé hors du volume interne V, posé contre le sol S, ce qui lui permet de coopérer avec l'émetteur 5 pour transférer l'énergie électrique de l'émetteur 5, comme déjà expliqué.

Comme visible sur les figures, le dispositif 2 comprend un chariot 30 porteur du récepteur 4. Le chariot 30 comprend une plateforme 31 sur laquelle sont montés les axes des articulations 21 des bras parallèles 15, 16. Le chariot 30 est soit muni de roues 32, comme sur la première variante des figures 3 et 4, soit en est dépourvu, comme sur la deuxième variante de réalisation, illustrée sur des figures 5 à 7.

Avantageusement, le train d'atterrissage 1 comprend un moteur électrique (non illustré), et, éventuellement, une unité de distribution de l'énergie électrique reçue par le récepteur 4, . Le train s'atterrissage comprend aussi un câble électrique 33, deux sur le mode de réalisation illustré, ou faisceau électrique, pour transférer l'énergie électrique à l'aéronef. L'énergie électrique reçue par le récepteur 4 peut être transférée au moteur électrique, éventuellement via l'unité, pour commander le déplacement des roues 12 du train d'atterrissage. L'invention n'est pas limitée à cette configuration et l'énergie électrique reçue par le système 1 peut être transférée à un moteur électrique disposé en dehors du train d'atterrissage 1.

On décrit maintenant le fonctionnement du train d'atterrissage 1, lorsqu'il équipe l'aéronef A.

En phase de vol, le train d'atterrissage 1 est en position de repos, dans un compartiment de l'aéronef A, et le dispositif 2 est en position rétractée. Dans cette position, le dispositif 2 ajoute peu de masse à l'aéronef A, et, replier le système entre les roues, dans le volume V, permet de ne pas avoir à retoucher la géométrie de trappes de trains ni de la forme aérodynamique de celles-ci.

En phase d'atterrissage, le train d'atterrissage 1 est sorti du compartiment, le dispositif 2 restant en position rétractée, de sorte qu'il n'impacte pas le déplacement des roues 12.

En phase de roulage, le dispositif 2 est piloté, par exemple par une unité de contrôle, pour le mettre en position déployée : le support 13 se déplie, passant de la position repliée à la position étendue. Puis, l'actionneur 28 repousse la plateforme 31 contre le sol S, ce qui assure soit une distance constante entre le patin 6 et le sol (première variante), sois un contact continu entre les contacteurs 7 et le sol (deuxième variante).

Une fois en position déployée, le dispositif 2 peut recevoir l'énergie électrique de l'émetteur 5, soit sans contact, soit par contact, comme déjà expliqué.

A l'inverse, lorsque l'aéronef est en position pour le décollage, le dispositif 2 est rétracté dans le volume interne V.

Ainsi, le train d'atterrissage 1, grâce au dispositif 2, constitue un moyen à la fois plus écologique et plus silencieux pour le déplacement de l'aéronef en phase de taxiing. En particulier, grâce au dispositif 2, l'aéronef ne consomme plus de carburant en phase de roulage, et réduit ses émissions de gaz toxiques, de type NOx et COx.

Des modifications et des améliorations aux mises en œuvre décrites ci-dessus de la présente invention peuvent apparaître à l'homme du métier. En particulier, les modes de réalisation et variantes décrites sont combinables dans la mesure où ils ne sont pas incompatibles. La description ci-dessus est illustrative au travers d'exemples plutôt que limitative. La portée de la présente invention est donc limitée uniquement par la portée des revendications ci-dessous.

## Revendications

1. Train d'atterrissage pour un aéronef (A), comprenant une jambe et un support de roues, et deux roues solidaires de la jambe par le support de roues, les roues étant distantes l'une de l'autre de sorte qu'un espace, dit volume interne, est délimité entre les deux roues, le train d'atterrissage comprenant un dispositif de réception d'énergie électrique (2), le dispositif de réception d'énergie électrique (2) comprenant un élément de réception d'énergie électrique (4), dit récepteur (4), configuré pour recevoir de l'énergie électrique émise par un élément d'émission d'énergie électrique, dit émetteur (5), le dispositif de réception d'énergie électrique (2) étant monté mobile entre une position rétractée et une position déployée, dans laquelle le récepteur (4) est disposé hors du volume interne (V), le dispositif de réception d'énergie électrique (2) comprenant une extrémité solidaire du support de roues.

2. Train d'atterrissage selon la revendication précédente, dans lequel le dispositif de réception d'énergie électrique (2) comprend une structure (13, 14) de maintien du récepteur (4).

3. Train d'atterrissage selon la revendication précédente, dans lequel la structure (13, 14) comprend une partie fixe, comportant l'extrémité du dispositif de réception d'énergie électrique (2) solidaire du support de roues et une partie articulée (13) sur la partie fixe (14).

4. Train d'atterrissage selon la revendication précédente, dans lequel le récepteur (4) est solidaire d'une extrémité de la partie articulée de la structure (13).

5. Train d'atterrissage selon la revendication précédente, dans lequel le récepteur est monté mobile relativement à la partie articulée de la structure (13).

6. Train d'atterrissage selon l'une des revendications précédentes, dans lequel le dispositif de réception d'énergie électrique (2) comprend un actionneur (28) de commande du récepteur (4).

7. Train d'atterrissage selon l'une des revendications précédentes, dans lequel le récepteur (4) comprend un patin à induction, pour coopérer avec l'émetteur (5) sans contact et/ou un contacteur pour coopérer avec l'émetteur (5) par contact.

8. Train d'atterrissage selon l'une des revendications précédentes, comprenant un moteur électrique configuré pour commander lesdites roues du train d'atterrissage de l'aéronef et configuré pour être alimenté en énergie électrique via le récepteur (4).

9. Train d'atterrissage selon l'une des revendications 2 à 8, dans lequel la partie articulée de la structure (13) comprend deux bras parallèles (15, 16), et au moins un bras de jonction (17) qui solidarise les bras parallèles (15, 16), l'un à l'autre.

10. Train d'atterrissage selon la revendication précédente, dans lequel chacun des bras (15, 16) s'étend entre une première extrémité (18) solidaire via une articulation (19) à la partie fixe (14) et une deuxième extrémité (20) solidaire via une articulation (21) au récepteur (4).

11. Train d'atterrissage selon la revendication précédente, dans lequel l'extrémité (21) de chacun des bras (15, 16) solidaire du récepteur (4) décrit un arc de cercle entre une première position correspondant à une valeur minimale d'un angle (β) et une deuxième position correspondant à une valeur maximale de l'angle (β), la valeur minimale étant comprise entre 110° et 160°, et la valeur maximale est comprise entre 120° et 170°.

12. Train d'atterrissage selon l'une des revendications 2 à 10, dans lequel la partie fixe (14) comprend une partie (23) reposant sur un support de roues (9) et deux barres parallèles (24 25), solidarisées par les articulations (19) aux bras parallèles (15, 16), un angle délimité par la partie (23) et chacune des barres (25, 26) étant compris entre une valeur minimale inférieure ou égale à 90° et une valeur maximale supérieure ou égale à 90°.

13. Aéronef, comprenant un train d'atterrissage selon l'une des revendications précédentes.

14. Système de transfert d'énergie électrique, comprenant un aéronef selon la revendication précédente et un émetteur d'énergie électrique configuré pour alimenter en énergie électrique le récepteur (4) dans la position déployée du dispositif de réception d'énergie électrique (2).
